# EUROPEAN PATENT APPLICATION

(11) **EP 4 282 823 A1**
(43) Date of publication of application: **29.11.2023**
(21) Application number: 22742707.7
(22) Date of filing: 24.01.2022
(51) Int. Cl.: C01B 39/46, B01J 37/10, B01J 29/70, B01J 20/18, B01J 20/30

(54) **BETA ZEOLITE AND METHOD FOR PRODUCING SAME**

(30) Priority: 25.01.2021 JP 2021009773
(71) Applicant: The University of Tokyo, Bunkyo-ku, Tokyo 113-8654 (JP); Mitsui Mining & Smelting Co., Ltd., Shinagawa-ku Tokyo 141-8584 (JP)
(72) Inventor: OKUBO, Tatsuya, Tokyo 113-8654 (JP); WAKIHARA, Toru, Tokyo 113-8654 (JP); IYOKI, Kenta, Tokyo 113-8654 (JP); TOMITA, Junki, Ageo-shi, Saitama 362-0021 (JP); HAYASHI, Katsuhiko, Ageo-shi, Saitama 362-0021 (JP); KANNO, Akihiro, Ageo-shi, Saitama 362-0021 (JP)
(74) Representative: Novagraaf Technologies
(86) International application number: PCT/JP2022/002370
(87) International publication number: WO 2022/158588

(57) **Abstract**

Provided is a method for producing a beta zeolite, the method including bringing a beta zeolite parent powder synthesized without using an organic structure-directing agent into contact with an alkaline aqueous solution having a pH of 12 or higher. The liquid temperature of the alkaline aqueous solution is preferably se to 40°C or above and 100°C or below. The ratio of the parent powder to the alkaline aqueous solution is preferably set to 10 g/L or greater and 1000 g/L or less. The contact time is preferably 0.5 hours or longer and 48 hours or shorter. The SiO₂/Al₂O₃ molar ratio is preferably s16 or less

## Description

### Technical Field

The present invention relates to a beta zeolite and a method for producing the same.

### Background Art

Beta zeolites are industrially used as, for example, molecular sieve adsorbents, which adsorb only molecules with specific sizes; adsorbents for separation, which adsorb molecules having strong affinities; catalyst bases, or catalytically active components.

Various methods for synthesizing beta zeolites have been proposed. A typical method involves use of tetraethylammonium ions as an organic structure-directing agent (hereinafter also referred to as "OSDA"). However, a compound containing a tetraethylammonium ion is expensive, and the compound is mostly decomposed upon completion of beta zeolite crystallization and therefore cannot be recovered or reused. For this reason, a beta zeolite produced using this method is expensive. To address this issue, a method for producing a beta zeolite without using an OSDA has been proposed.

For example, Patent Literature 1 to 3 propose a method for producing a beta zeolite, the method including mixing a seed crystal of a beta zeolite with a gel containing a silica source, an alumina source, an alkali source, and water and then heating the mixture in a sealed state. This method enables the production of a beta zeolite without using an OSDA, which is an expensive material, and is therefore economically advantageous. In addition, this method reduces the environmental burden advantageously.

### Citation List

### Patent Literature

Patent Literature 1: US 2012/190534A1
Patent Literature 2: US 2018/022612A1
Patent Literature 3: US 2019/177173A1

### Summary of Invention

However, in the method disclosed in Patent Literature 1 to 3, particles of the resulting beta zeolite tend to aggregate to thereby form coarse particles, since the mixture of the seed crystal and the gel is left to stand to synthesize a beta zeolite. According to Patent Literature 1 to 3, the coarse particles are classified to thereby obtain fine particles. However, this method involves the loss due to many coarse particles, and the amount of fine particles obtained is limited. It is also conceivable to obtain fine particles through pulverization, but this may destroy the crystal structure of zeolite. Obtaining a fine zeolite particle is important for expanding applications of zeolite and also for obtaining a new zeolite with the fine zeolite particle as a seed crystal.

Therefore, it is an object of the present invention to provide a beta zeolite that is in the form of fine particles and is useful in synthesizing a zeolite without using an organic structure-directing agent, as well as a method for producing the beta zeolite.

The present invention provides a method for producing a beta zeolite, the method including bringing a beta zeolite parent powder synthesized without using an organic structure-directing agent into contact with an alkaline aqueous solution having a pH of 12 or higher.

Also, the present invention provides a beta zeolite having: a SiO₂/Al₂O₃ molar ratio of 16 or less; a 90th percentile particle size D₉₀, on a volume basis, of 10 µm or less, as determined by laser diffraction/scattering particle size distribution analysis; and a micropore volume of from 0.15 to 0.30 cm³/g.

### Brief Description of Drawings

[Fig. 1] Fig. 1 is a scanning electron microscope image of the beta zeolite obtained in Example 1.
[Fig. 2] Fig. 2 is a scanning electron microscope image of the beta zeolite obtained in Example 3.
[Fig. 3] Fig. 3 is a scanning electron microscope image of the beta zeolite obtained in Example 5.
[Fig. 4] Fig. 4 is a scanning electron microscope image of the beta zeolite (i.e., a beta zeolite parent powder) of Comparative Example 1.

### Description of Embodiments

Hereinafter, the present invention will be described based on preferred embodiments thereof. The present invention relates to a method for producing a beta zeolite. In the present production method, a beta zeolite parent powder is used as a raw material, and the parent powder is treated with an alkaline aqueous solution to thereby obtain a target fine powder of a beta zeolite. The parent powder used as the raw material is synthesized without using an organic structure-directing agent (OSDA).

Beta zeolites synthesized without using an OSDA (hereinafter also referred to as "OSDA-free zeolites") are known. An OSDA-free zeolite can be obtained by, for example, mixing a seed crystal of a beta zeolite (this seed crystal may be synthesized using an OSDA) with a reactant mixture containing a silica source, an alumina source, an alkali source, and water, and heating the resulting mixture to carry out synthesis at high temperature and high pressure.

The particle size of the beta zeolite seed crystal used to synthesize the parent powder is preferably from 0.1 to 50 µm, more preferably from 0.1 to 20 µm, and even more preferably from 0.1 to 10 µm, in terms of the 90th percentile particle size D₉₀, on a volume basis, as determined by laser diffraction/scattering particle size distribution analysis. The method for determining the particle size by laser diffraction/scattering particle size distribution analysis is as described in Examples below.

The reactant mixture to which the seed crystal is to be added is obtained by mixing a silica source, an alumina source, an alkali source, and water, preferably so as to satisfy molar ratios below. A target beta zeolite parent powder can be successfully obtained by setting the molar ratios of the composition of the reactant mixture within the following range.
- SiO₂/Al₂O₃ = from 10 to 200, in particular, from 10 to 45.
- Na₂O/SiO₂ = from 0.18 to 0.4, in particular, from 0.2 to 0.3.
- H₂O/SiO₂ = from 10 to 50, in particular, from 13 to 25.

Examples of the silica source used to obtain the reactant mixture having the above molar ratios include silica itself and silicon-containing compounds capable of forming silicate ions in water. Specific examples include wet process silica, dry process silica, colloidal silica, sodium silicate, and aluminosilicate gel. These silica sources may be used singly or in combinations of two or more thereof. Of these silica sources, silica (silicon dioxide) and/or aluminosilicate gel are preferably used, in view of obtaining a beta zeolite parent powder without unwanted by-products.

As the alumina source, a water-soluble aluminum-containing compound may be used, for example. Specific examples include sodium aluminate, aluminum nitrate, and aluminum sulfate. Aluminum hydroxide is also a suitable alumina source. These alumina sources may be used singly or in combinations of two or more thereof. Of these alumina sources, sodium aluminate and/or aluminum hydroxide are preferably used, in view of obtaining a beta zeolite parent powder without unwanted by-products (e.g., sulfates, nitrates, etc.).

As the alkali source, sodium hydroxide may be used, for example. It is note that, when sodium silicate is used as the silica source, or when sodium aluminate is used as the alumina source, the sodium silicate or the sodium aluminate contains sodium, which is the alkali metal component. The sodium is also regarded as NaOH and serves as an alkali component, and accordingly, Na₂O above is calculated as the sum of all alkali components in the reactant mixture.

In view of successfully obtaining a beta zeolite parent powder, the amount of the beta zeolite used as the seed crystal is preferably from 0.1 to 20 mass% with respect to the silica component in the reactant mixture. The amount of the beta zeolite used as the seed crystal is more preferably from 0.1 to 10 mass%, and even more preferably from 0.1 to 5 mass%.

Regarding the order in which these starting materials are added for preparing the reactant mixture, a method that facilitates obtaining a uniform reactant mixture can be used. For example, a uniform reactant mixture can be obtained by, at room temperature, adding and dissolving the alumina source into an aqueous sodium hydroxide solution, then adding the silica source, and stirring and mixing the resulting combination. The seed crystal is added while being mixed with the silica source or after the silica source has been added. Then, the mixture is stirred and mixed so that the seed crystal is uniformly dispersed. There also is no particular limitation on the temperature at which the reactant mixture is prepared, and typically the preparation can be performed at room temperature (20°C to 25°C).

The reactant mixture containing the seed crystal is placed in a vessel and reacted by heating in a sealed state, whereby a beta zeolite crystal is formed. The reactant mixture does not contain any OSDA. An exemplary method for forming the crystal includes heating the reactant mixture and leaving it to stand at high temperature and high pressure. The heating temperature is preferably within a range of 100°C or above and 200°C or below, and more preferably 120°C or above and 180°C or below. When the reactant mixture is heated at 100°C or above, a satisfactory crystallization rate can be achieved. On the other hand, when the reactant mixture is heated at 200°C or below, other zeolite species such as mordenite are unlikely to be formed. The heating time is not critical in the production method, and the reactant mixture can be heated until a beta zeolite parent powder with a sufficiently high degree of crystallinity is formed. Typically, a beta zeolite parent powder with a satisfactory degree of crystallinity can be obtained by heating for about 5 to 150 hours.

In the case where the heating is performed using the stationary method, the liquid may be subjected to aging prior to the heating. Aging refers to an operation of keeping the liquid at a temperature lower than the reaction temperature for a certain period of time. In aging, the liquid is typically left to stand without stirring. Aging brings about the effects of preventing the by-production of impurities, enabling heating under stirring without causing the by-production of impurities, and increasing the reaction rate, and other effects. The aging temperature and time are adjusted so as to maximize the above-described effects. In the present invention, aging is performed at preferably 20 to 80°C, and more preferably 20 to 60°C, for preferably 2 hours to 1 day.

A beta zeolite parent powder is obtained through the above-described heating. After the heating is complete, the parent powder formed is separated from the liquid by filtration, and then washed with water or warm water, followed by drying. Since the dried parent powder does not contain any OSDA, calcination is not necessary. The parent powder in this state contains Na⁺ ions in the crystal. The parent powder in this state may be subjected to the next step. Alternatively, the Na⁺ ions in the parent powder may be exchanged for NH₄⁺ ions, followed by subjecting the resulting parent powder to the next step. Alternatively, the parent powder after the exchange for NH₄⁺ ions may be calcined to be converted to an H⁺ type, followed by subjecting the resulting parent powder of the H⁺ type to the next step. In view of industrial productivity, it is advantageous to subject the parent powder of the Na⁺ type to the next step.

In both cases of a parent powder of the Na⁺ type and a parent powder of the H⁺ type obtained through calcination, the particle size of the parent powder is approximately from 10 to 200 µm, in terms of the 90th percentile particle size D₉₀, on a volume basis, as determined by laser diffraction/scattering particle size distribution analysis. In the parent powder, primary particles have gathered to form aggregates. The term "primary particle" herein refers to a crystal grain of a polycrystal, which is a cluster of single crystals. In the present invention, the primary particle is the smallest unit found as an independent particle in observation using an electron microscope.

For all cases of using a parent powder of the Na⁺ type, using a parent powder of the NH₄⁺ type obtained by ion exchange, and using a parent powder of the H⁺ type obtained by calcination, the parent powder is preferably pulverized to an extent such that crystallinity is not impaired, or classified, to thereby remove coarse particles to adjust the particle size of the parent powder. This advantageously results in efficiently performing the contact of the parent powder with an alkaline aqueous solution, which is the next step. For pulverization, a jet mill, a ball mill, a bead mill, and the like can be used, for example. For classification, a method in which particles in a slurry obtained by dispersing the parent powder in a dispersion medium are divided through sedimentation can be used, for example, and wet classification, dry classification, and the like can also be used. The particle size of the parent powder after classification is preferably from 0.1 to 20 µm, and more preferably from 0.1 to 10 µm, in terms of the 90th percentile particle size D₉₀, on a volume basis, as determined by laser diffraction/scattering particle size distribution analysis.

The parent powder is then contacted with an alkaline aqueous solution (the contact step). For example, the parent powder and the alkaline aqueous solution can be brought into contact with each other by mixing them. An OSDA-free zeolite parent powder produced according to the above-described method is advantageously highly crystalline, but the particles of the parent powder tend to be aggregated. The inventors of the present invention have conducted in-depth research on a method for breaking up the aggregation, and have found that, by bringing the aggregates of the OSDA-free zeolite parent powder into contact with an alkaline aqueous solution, grain boundary portions of the aggregates can be selectively dissolved to thereby break up the aggregates into primary particles in a dispersed state.

The alkaline aqueous solution to be brought into contact with the OSDA-free zeolite parent powder may be any of aqueous solutions of various basic substances. Examples of the basic substances include alkali metal hydroxides such as sodium hydroxide and potassium hydroxide, alkaline earth metal hydroxides such as calcium hydroxide, and ammonia.

The pH of the alkaline aqueous solution when brought into contact with the OSDA-free zeolite parent powder is preferably 12 or higher, more preferably 13 or higher, and even more preferably 14 or higher, in view of dissolving selectively the grain boundary portions of the OSDA-free zeolite particles.

The concentration of the basic substance in the alkaline aqueous solution is adjusted so that the pH of the alkaline aqueous solution is the above-described value. The OH⁻ ion concentration of the alkaline aqueous solution is preferably 0.01 mol/L or higher, more preferably 0.1 mol/L or higher, and even more preferably 1.0 mol/L or higher. There is no particular limitation on the upper limit of the concentration; however, when the concentration is about 5.0 mol/L, or preferably about 2.3 mol/L, the aggregates of the OSDA-free zeolite parent powder can be sufficiently broken up into primary particles in a dispersed state.

The amounts of the OSDA-free zeolite parent powder and the alkaline aqueous solution used are preferably set such that the ratio of the parent powder to the alkaline aqueous solution is from 10 to 1000 g/L, in view of sufficiently braking up the aggregates of the OSDA-free zeolite parent powder into primary particles in a dispersed state. The ratio of the parent powder to the alkaline aqueous solution is more preferably from 20 to 500 g/L, even more preferably from 30 to 200 g/L, and yet even more preferably from 30 to 180 g/L.

The OSDA-free zeolite parent powder and the alkaline aqueous solution can be brought into contact with each other at room temperature. Room temperature refers to ambient temperature, or, in other words, the temperature when intentional heating and cooling are not performed. Instead of contact with each other at room temperature, the OSDA-free zeolite parent powder and the alkaline aqueous solution can be brought into contact with each other under heating. For example, the OSDA-free zeolite parent powder can be added to the alkaline aqueous solution heated to a predetermined temperature. The temperature to which the alkaline aqueous solution is heated is preferably from 40°C to 100°C, in view of dissolving selectively the grain boundary portions of the OSDA-free zeolite particles. The heating temperature is more preferably from 40°C to 80°C, and even more preferably from 50°C to 70°C. It is preferable to stir the alkaline aqueous solution when bringing the OSDA-free zeolite parent powder and the alkaline aqueous solution into contact with each other.

The time for which the OSDA-free zeolite parent powder and the alkaline aqueous solution are in contact with each other is appropriately adjusted such that the aggregates of the OSDA-free zeolite parent powder can be sufficiently broken up into primary particles in a dispersed state. Typically, a satisfactory result can be obtained by bringing them into contact with each other for preferably 0.5 hours or longer and 48 hours or shorter, more preferably 1 hour or longer and 12 hours or shorter, and even more preferably 1 hour or longer and 4 hours or shorter.

As described above, by bringing the aggregates of the OSDA-free zeolite parent powder into contact with the alkaline aqueous solution, grain boundary portions of the particles constituting the aggregates can be selectively dissolved. Since the alkaline aqueous solution acts mainly on the grain boundaries of the primary particles constituting the aggregates, the crystal structure of the beta zeolite forming the particles is unlikely to be affected by the alkaline aqueous solution. Accordingly, the crystallinity of the beta zeolite remains substantially the same before and after the contact with the alkaline aqueous solution, and the high degree of crystallinity before the contact with the alkaline aqueous solution is maintained even after the contact. In this respect, the present method stands in contrast to the conventional method in which an OSDA-free zeolite parent powder is pulverized. If an OSDA-free zeolite parent powder is pulverized, an external force applied during the pulverization tends to degrade the crystallinity of the beta zeolite, and, in some cases, an amorphous substance may be produced.

In addition, the conventional method in which an OSDA-free zeolite parent powder is classified to remove coarse particles has drawbacks, and specifically, the loss due to many coarse particles and therefore a poor yield. In contrast, the method in which an OSDA-free zeolite parent powder is brought into contact with an alkaline aqueous solution advantageously causes no loss due to coarse particles and therefore gives a high yield, since this method merely breaks up the aggregation of primary particles constituting the aggregates. In fact, it was confirmed by microscopic observation by the inventors of the present invention that the particle sizes of primary particles constituting the aggregates substantially matched a particle size distribution obtained by laser diffraction/scattering particle size distribution analysis after the contact with the alkaline aqueous solution.

It is note that bringing the OSDA-free zeolite parent powder into contact with the alkaline aqueous solution causes desilication of particles, and thus, the SiO₂/Al₂O₃ molar ratio may be slightly lower than that before the treatment with the alkaline aqueous solution.

By the above-described method, the aggregates of the OSDA-free zeolite parent powder is sufficiently broken up into primary particles in a dispersed state. The thus obtained beta zeolite is a beta zeolite synthesized without using an organic structure-directing agent. The SiO₂/Al₂O₃ molar ratio of this beta zeolite is approximately the same value as that of the OSDA-free zeolite, which is the parent powder. Specifically, the SiO₂/Al₂O₃ molar ratio is preferably 16 or less, more preferably 12 or less, and even more preferably 10 or less. Also, the SiO₂/Al₂O₃ molar ratio is preferably 2 or greater, more preferably 4 or greater, and even more preferably 6 or greater.

The beta zeolite that has been broken up into primary particles in a dispersed state by the effect of the alkaline aqueous solution preferably has a particle size D₉₀ of 10 µm or less, more preferably 7 µm, even more preferably 5 µm or less, and yet even more preferably 1 µm or less. Also, the particle size D₉₀ of the beta zeolite is preferably 10 nm or greater, more preferably 50 nm or greater, and even more preferably 0.1 µm or greater.

The beta zeolite that has been broken up into primary particles in a dispersed state by the effect of the alkaline aqueous solution has a large pore volume. More specifically, the micropore volume of the beta zeolite is preferably from 0.15 to 0.30 cm³/g, and the beta zeolite having such a micropore volume is advantageous for various applications, for example, when used as a catalyst or the like. The micropore volume of the beta zeolite is more preferably 0.18 cm³/g or greater, and even more preferably 0.22 m³/g or greater. The method for measuring the micropore volume is as described in Examples below.

The beta zeolite obtained using the production method of the present invention can be used in various applications utilizing its characteristics including a high degree of crystallinity and a fine particle size. For example, the beta zeolite is suitably used as a catalytic material for treating exhaust gas generated by internal combustion engines. Examples of the catalytic material include a base material and a catalytically active component. Also, the beta zeolite is suitably used as an adsorbent for adsorbing only molecules having a specific size in various industrial fields, and as a catalyst for reactions of organic compound synthesis in the petrochemical industry.

Furthermore, the beta zeolite obtained using the production method of the present invention can also be used as a seed crystal for synthesizing beta zeolite. Since this seed crystal is synthesized without using an OSDA, the environmental burden can be minimized by synthesizing a beta zeolite using this seed crystal and no OSDA. The method for synthesizing the beta zeolite using the seed crystal and no OSDA is as described above. Specifically, the synthesis can be performed by mixing the seed crystal and a reactant mixture having a specific composition such that the amount of the seed crystal is from 0.1 to 20 mass% with respect to the silica component in the reactant mixture, and then heating the mixture in a sealed state at a temperature of 100°C or above and 200°C or below.

### Examples

Hereinafter, the present invention will be described in further detail by way of examples. However, the scope of the present invention is not limited to the examples below. Unless otherwise specified, "%" means "mass%".

### Example 1

### (1) Synthesis of OSDA-free beta zeolite parent powder

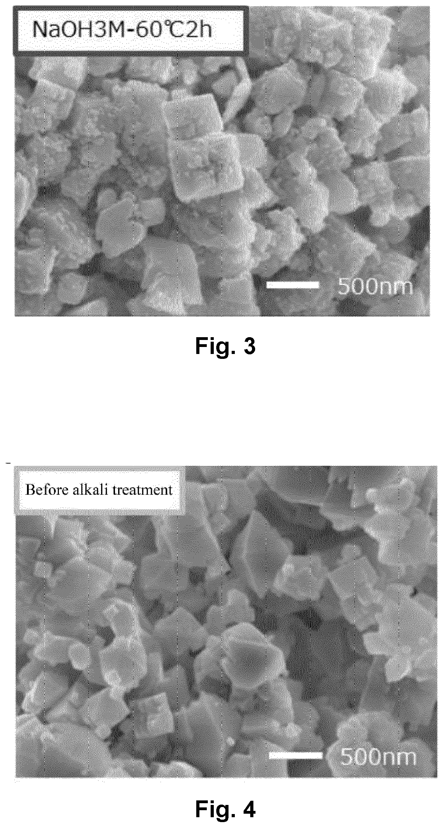

A beta zeolite (HSZ931HOA (SiO₂/Al₂O₃ molar ratio = 28), manufactured by Tosoh Corporation) was provided as a seed crystal. An aluminosilicate gel having a SiO₂/Al₂O₃ molar ratio = 16 was prepared from sodium silicate No. 3, an aqueous aluminum sulfate solution, sulfuric acid, and water. The synthesized gel slurry was filtered using a centrifugal separator, and the solids was washed with pure water to obtain a hydrated aluminosilicate gel having a water content of 71.0%. A reactant mixture having a composition with a SiO₂/Al₂O₃ molar ratio = 16, a Na₂O/SiO₂ molar ratio = 0.23, and a H₂O/SiO₂ molar ratio = 15 was prepared from the aluminosilicate gel prepared above, a 50 w/v% aqueous sodium hydroxide solution, and pure water, and the reactant mixture was mixed with the seed crystal. Then, the mixture was placed in a sealed vessel and heated at 150°C for 43 hours to synthesize a beta zeolite without using an OSDA. After the sealed vessel was cooled, the product was collected by filtering, and washed with warm water to obtain a white powder. It was confirmed by X-ray diffraction analysis of this product that the product was a beta zeolite containing no impurities. This beta zeolite was used as a parent powder. Fig. 4 shows an SEM image of the parent powder. It was found by analysis of the composition by ICP-MS that the SiO₂/Al₂O₃ molar ratio of the parent powder was 9.8. The 90th percentile particle size D₉₀, on a volume basis, was 23 µm as determined by laser diffraction/scattering particle size distribution analysis.

The 90th percentile particle size D₉₀, on a volume basis, was determined by laser diffraction/scattering particle size distribution analysis in the following manner.

A laser diffraction/scattering particle size distribution analyzer ("LS 13 320, Universal Liquid Module" manufactured by Beckman Coulter, Inc.) was used. The zeolite was added to pure water, and dispersed by ultrasonication for 180 seconds at 40% flow speed, and then, the particle size distribution was analyzed. The analysis conditions were as follows: refractive index of solvent, 1.33; refractive index of particle, 1.50; measurement time, 90 seconds; and measurement range, 0.020 to 2000 µm.

### (2) Treatment of parent powder with alkaline aqueous solution

The above-described beta zeolite parent powder was added to a 1.0 mol/L aqueous sodium hydroxide solution, followed by stirring for 2 hours. The ratio of the mass of the beta zeolite parent powder to the volume of the aqueous sodium hydroxide solution was 40 g/L. The liquid temperature was kept at 60°C during the stirring. Then, solid-liquid separation was performed, and the solids were collected. The solids were washed with water and then dried, to obtain a target beta zeolite powder.

The composition of the thus obtained beta zeolite was analyzed to determine the SiO₂/Al₂O₃ molar ratio.

Also, the micropore volume of the obtained beta zeolite was calculated. The micropore volume was calculated in the following manner using a "BELSORP MINI X" manufactured by MicrotracBEL Corp.: After pre-treatment at 400°C under vacuum for 3 hours, an adsorption isotherm of nitrogen at 77 K was created, and analyzed using a t-plot method.

Also, the 90th percentile particle size D₉₀ on a volume basis was determined using the laser diffraction/scattering particle size distribution analyzer described above.

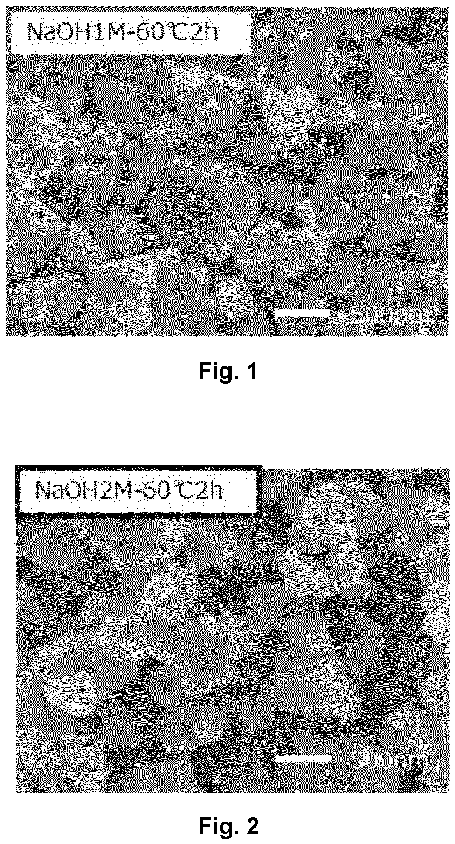

Table 1 shows the results. Fig. 1 shows a scanning electron microscope (hereinafter also referred to as "SEM") image of the beta zeolite.

### (3) Synthesis of beta zeolite

A beta zeolite was synthesized using the beta zeolite obtained in (2) above (this beta zeolite was not a beta zeolite produced using an OSDA) as a seed crystal.

A reactant mixture having a composition with a SiO₂/Al₂O₃ molar ratio = 16, a Na₂O/SiO₂ molar ratio = 0.23, and a H₂O/SiO₂ molar ratio = 15 was prepared from the aluminosilicate gel prepared in (1) above, a 50 w/v% aqueous sodium hydroxide solution, and pure water, and the reactant mixture was mixed with the seed crystal. Then, the mixture was placed in a sealed vessel and heated at 150°C for 48 hours to synthesize a beta zeolite without using an OSDA. After the sealed vessel was cooled, the product was collected by filtering, and washed with warm water to obtain a white powder. It was confirmed by X-ray diffraction analysis of this product that the product was a beta zeolite containing no impurities.

### Examples 2 to 5

A beta zeolite was obtained in the same manner as in Example 1, except that the concentration of the aqueous sodium hydroxide solution in (2) of Example 1 was changed as shown in Table 1. The SiO₂/Al₂O₃ molar ratio, micropore volume, and particle size D₉₀ of the obtained beta zeolite were determined in the same manner as in Example 1. Table 1 shows the results.

A beta zeolite was synthesized in the same manner as in (3) of Example 1, by using the obtained beta zeolite as a seed crystal. It was confirmed by X-ray diffraction analysis of the thus obtained beta zeolites that the beta zeolites of Examples 2 and 3 contained no impurities.

### Example 6

A beta zeolite was obtained in the same manner as in Example 1, except that in (2), 150 g of a beta zeolite parent powder was added to 926 mL of a 2.0 mol/L aqueous sodium hydroxide solution, and that as a result, the ratio of the volume of the aqueous sodium hydroxide solution to the mass of the beta zeolite parent powder was 162 g/L. The SiO₂/Al₂O₃ molar ratio, micropore volume, and particle size D₉₀ of the obtained beta zeolite were determined in the same manner as in Example 1. Table 1 shows the results.

A beta zeolite was synthesized in the same manner as described in (3) of Example 1, by using the obtained beta zeolite as a seed crystal. It was confirmed by X-ray diffraction analysis of the thus obtained beta zeolite that the beta zeolite contained no impurities.

### Comparative Example 1

This comparative example is an example in which the treatment of the parent powder with the alkaline aqueous solution in (2) in Example 1 was not performed.

In this comparative example, the OSDA-free zeolite parent powder described in (2) of Example 1 was used as a seed crystal, and a beta zeolite was synthesized in the same manner as in (3) of Example 1. It was confirmed by X-ray diffraction analysis of the thus obtained beta zeolite that the beta zeolite contained mordenite and an amorphous substance.

### Comparative Example 2

This comparative example is an example in which the OSDA-free zeolite parent powder obtained in (2) of Example 1 was treated with an acidic aqueous solution instead of an alkaline aqueous solution.

The OSDA-free beta zeolite parent powder obtained in (2) of Example 1 was added to a 0.1 mol/L aqueous sulfuric acid solution, followed by stirring for 2 hours. The ratio of the volume of the aqueous sulfuric acid solution to the mass of the OSDA-free beta zeolite parent powder was 40 g/L. The liquid temperature was kept at 60°C during the stirring. Then, solid-liquid separation was performed, and the solids were collected. The solids were washed with water and then dried, to obtain a target beta zeolite powder. The SiO₂/Al₂O₃ molar ratio, micropore volume, and particle size D₉₀ of the obtained beta zeolite were measured in the same manner as in Example 1. Table 1 shows the results. In the beta zeolite obtained in this comparative example, dealumination occurred due to the treatment of the parent powder with the acidic aqueous solution, and accordingly the SiO₂/Al₂O₃ molar ratio increased compared with that before the treatment with the acidic aqueous solution.

A beta zeolite was synthesized in the same manner as described in (3) of Example 1, by using the obtained beta zeolite as a seed crystal. X-ray diffraction measurement of the thus obtained beta zeolite confirmed that the beta zeolite contained mordenite in a small amount.

**Table 1**

| | Method for treating parent powder | | | Beta zeolite | | | Result of synthesis when used as seed crystal |
|---|---|---|---|---|---|---|---|
| | Alkali treatment | Acid treatment | Parent powder / Treatment liquid (g/L) | SiO₂/Al₂O₃ (molar ratio) | Micropore volume (cm³/g) | Particle size D₉₀ (µm) | |
| Ex. 1 | NaOH 1.0 mol/L | - | 40 | 9.2 | 0.26 | 0.72 | BEA |
| Ex. 2 | NaOH 1.5 mol/L | - | 40 | 8.8 | 0.27 | 0.62 | BEA |
| Ex. 3 | NaOH 2.0 mol/L | - | 40 | 8.4 | 0.25 | 0.56 | BEA |
| Ex. 4 | NaOH 2.5 mol/L | - | 40 | 7.8 | 0.26 | 0.63 | BEA + MOR |
| Ex. 5 | NaOH 3.0 mol/L | - | 40 | 7.0 | 0.26 | 6.70 | BEA + MOR |
| Ex. 6 | NaOH 2.0 mol/L | - | 162 | 7.6 | 0.24 | 0.58 | BEA |
| Com. Ex. 1 | - | - | - | 9.8 | 0.25 | 23.0 | BEA + MOR + Amorphous substance |
| Com. Ex. 2 | - | H₂SO₄ 0.1 mol/L | 40 | 14.0 | 0.24 | 15.0 | BEA + MOR |

As is clear from the results shown in Table 1, the particle sizes D₉₀ of the beta zeolites obtained in the examples were smaller than those of the beta zeolites obtained in the comparative examples, and it was thus found that the treatment with an alkaline aqueous solution reduces the particle size of beta zeolite particles to a fine particle size.

The value of D₉₀ of Example 5 was greater than those of the other examples, and this is probably because the aggregated beta zeolite parent powder of Example 5 was once broken up into primary particles in a dispersed state, which were then aggregated again.

### Industrial Applicability

As described in detail above, the present invention provides a beta zeolite fine particles that is useful for synthesizing a zeolite without using an organic structure-directing agent, as well as a method for producing the beta zeolite are provided.

## Claims

1. A method for producing a beta zeolite, the method comprising bringing a beta zeolite parent powder synthesized without using an organic structure-directing agent into contact with an alkaline aqueous solution having a pH of 12 or higher.

2. The method according to claim 1, wherein when the parent powder and the alkaline aqueous solution are brought into contact with each other, a liquid temperature of the alkaline aqueous solution is set to 40°C or above and 100°C or below and a ratio of the parent powder to the alkaline aqueous solution is set to 10 g/L or greater and 1000 g/L or less.

3. The method according to claim 1 or 2, comprising:
mixing a reactant mixture with the beta zeolite obtained by bringing the parent powder into contact with the alkaline aqueous solution such that an amount of the beta zeolite is from 0.1 to 20 mass% with respect to a silica component in the reactant mixture,
wherein the reactant mixture has a composition with molar ratios below:
SiO₂/Al₂O₃ = from 10 to 200,
Na₂O/SiO₂ = from 0.18 to 0.4, and
H₂O/SiO₂ = from 10 to 50;
and heating a resulting mixture at 100°C or above and 200°C or below in a sealed state.

4. A beta zeolite having a SiO₂/Al₂O₃ molar ratio of 16 or less, a 90th percentile particle size D₉₀, on a volume basis, of 10 µm or less, as determined by laser diffraction/scattering particle size distribution analysis, and a micropore volume of from 0.15 to 0.30 cm³/g.

5. A catalytically active component comprising the beta zeolite according to claim 4.

6. An adsorbent comprising the beta zeolite according to claim 4.
